# EUROPEAN PATENT APPLICATION

(11) **EP 3 945 662 A1**
(43) Date of publication of application: **02.02.2022**
(21) Application number: 20188773.4
(22) Date of filing: 30.07.2020
(51) Int. Cl.: H02K 11/026, B60S 1/08, H01G 4/35, H02K 5/14, H02K 5/22, H02K 7/116

(54) **DC MOTOR ARRANGEMENT FOR AN AUTOMOTIVE WIPER**

(71) Applicant: Valeo Systèmes d'Essuyage, 78322 Le Mesnil Saint Denis (FR)
(72) Inventor: KAPITZA, Harald, 74321 Bietigheim (DE); STEFANI, Siegfried, 74321 Bietigheim (DE); SUESSER, Karl Heinz, 74321 Bietigheim (DE); ZHOU, An, 93012 BOBIGNY (FR); TAKI, Jad, 93012 BOBIGNY (FR)
(74) Representative: Valeo Visibility

(57) **Abstract**

The invention is referred to a DC motor arrangement for an automotive wiper. This DC motor arrangement comprises a first portion of a housing (1) and a second portion of a housing (12), a DC motor (2) located inside the first portion of the housing (1), the DC motor (2) comprising a first power line (2a) and a second power line (2b), and a filter unit (30) associated to the DC motor (2).

The filter unit (30) comprises: a first filter means (3) connected in series with the first power line (2a), a second filter means (4) connected in series with the second power line (2b), a first portion (5) of a metallic plate (56) connected to the first filter means (3), a second portion (6) of a metallic plate (56) connected to the second filter means (4). The first portion (5) of the metallic plate (56) and the second portion (6) of the metallic plate (56) are electrically connected to a common substrate (8), and respectively connected in series to the second portion of the housing (12).

## Description

### TECHNICAL FIELD

The present invention belongs to the field of devices for automotive vehicles, and more specifically, to the design of the direct current (DC) motors installed in the wiper arrangements.

### STATE OF THE ART

Automotive electromagnetic compatibility (EMC) requirements are growing stricter every year. It is well known that brush type DC motors naturally generates an important electromagnetic noise in a very broad band frequency range, in which the EMC results are not compliant with most Original Equipment Manufacturer (OEM) specifications.

Different solutions are known, but they are costly and not very effective.

### DESCRIPTION OF THE INVENTION

The invention provides a solution for this problem by the provision of a DC motor arrangement according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a DC motor arrangement for an automotive wiper, the DC motor arrangement comprising
a first portion of a housing and a second portion of a housing;
a DC motor located inside the first portion of the housing, the DC motor comprising a first power line and a second power line; and
a filter unit associated to the DC motor;
wherein the filter unit comprises:
a first filter means connected in series with the first power line;
a second filter means connected in series with the second power line;
a first portion of a metallic plate connected to the first filter means;
a second portion of a metallic plate connected to the second filter means;
wherein the first portion of the metallic plate and the second portion of the metallic plate are electrically connected to a common substrate, and respectively connected in series to the second portion of the housing.

This system provides an effective and non-expensive way of reducing the electromagnetic noise caused by the DC motor.

The metallic plate may be common for both filter means, or may be two separate metallic plates, one for each filter means.

In some particular embodiments, the first filter means are connected to the first power line by the interposition of a first inductor and the second filter means are connected to the second power line by the interposition of a second inductor.

Inductors are very commonly used in this type of motors, although they are not essential.

In some particular embodiment, the common substrate is a printed circuit board and wherein the first and the second filter means are surface mounted devices disposed on the printed circuit board.

This process is common in the automotive industry, so the production of the filter unit may be achieved with low cost and high reliability.

In some particular embodiments, wherein the printed circuit board comprises a first layer arranged to route the first and the second filter means and a second layer arranged to be electrically connected to the first and the second portions of the metallic plate.

The printed circuit board may be used to route the capacitors and also as a support for attaching the metallic plate to be connected to the second portion of the housing.

In some particular embodiments, the metallic plate comprise at least one protrusion and the common substrate comprises at least one notch arranged to cooperate with the corresponding at least one protrusion.

During the attachment soldering process, the retaining effect of the protrusion in the notch prevents the metallic plate to move with respect to the printed circuit board.

In some particular embodiments, the printed circuit board comprises at least one contact retainer soldered to the first layer, each contact retainer having an orifice to receive a corresponding DC motor power line and arranged to hold the corresponding DC motor power line in a tight manner.

The parts may be manufactured separately and then just installed by introducing the power line inside the orifice of the printed circuit board, thus ensuring a non-soldered electrical contact between these two elements.

In some particular embodiments, each contact retainer comprises a plurality of curved spring elements defining the orifice and arranged to hold a corresponding DC motor power line against the spring elements when the corresponding DC motor power line is inserted into the orifice.

These curved spring elements may be lips which may be bent when the power line is introduced or may be calibrated to leave a tight orifice so that the line is introduced creating the non-soldered electrical contact.

In some particular embodiments, the DC motor wires are soldered to the first layer of the printed circuit board.

This is an alternative solution which does not require further steps to have the arrangement finished.

In some particular embodiments, the first filter means comprises a first plurality of capacitors connected in parallel between the first power line and the first portion of the metallic plate and the second filter means comprise a second plurality of capacitors connected in parallel between the second power line and the second portion of the metallic plate.

Capacitors in parallel between the power line and the metallic plate are tuneable to provide a suitable shield against electromagnetic noise.

With more than one capacitor, a symmetric arrangement may be designed, which has proven to be advantageous when designing the capacitance values.

In some particular embodiments, the first and the second plurality of capacitors are multi-layer ceramic chip capacitors disposed on the common substrate.

Surface Mounted Device (SMD) Multi-Layer Ceramic Capacitors (MLCC) provide a small package and contributes to reduce the parasitic inductance of the arrangement.

In some particular embodiments, the capacitors of the first plurality of capacitors are arranged symmetrically with respect to one hole of the printed circuit board and the capacitors of the second plurality of capacitors are arranged symmetrically with respect to another hole of the printed circuit board.

A symmetrical arrangement produces a lower parasitic inductance compared to a non-symmetrical arrangement.

In some particular embodiments, each of the first and the second plurality of capacitors comprises four capacitors, wherein two adjacent capacitors of the first plurality of capacitors form an angle of 90° and two adjacent capacitors of the second plurality of capacitors form an angle of 90°.

A symmetrical arrangement of four capacitors is particularly advantageous, but there is not an upper limit for the number of capacitors to be installed.

In some particular embodiments, each contact retainer has a flat portion around the orifice, the flat portion having a plurality of recess areas disposed symmetrically with respect to the orifice. In further particular embodiments, the flat portion has four recess areas, each recess area being disposed at least partially around a capacitor of the corresponding first or second filter means.

This symmetrical arrangement contributes to the low parasitic inductance created by the filter unit.

In some particular embodiments, each portion of the metallic plate comprises an edge which forms an angle comprised between 0° and 90°, preferably between 40º and 60°, with respect to the second portion of the housing.

This angulation arrangement ensures that the metallic plate presses against the wall of the second portion of the housing, thus ensuring contact between these two elements.

In some particular embodiments,
the DC motor arrangement comprises a brush card
the filter unit is inserted in a slot comprised in a portion of the brush card
the second portion of the housing comprises an opening and
the portion of the brush card is inserted into the opening so that first and second portion of the metallic plate close, at least partially, said opening.

By the interposition of the filter unit in contact with the second portion of the housing, something similar to a Faraday cage can be formed so as to reduce the electromagnetic noise caused by the DC motor.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a first exploded view of a DC motor arrangement for an automotive wiper according to the invention.
Figure 2 shows a second exploded view of a detail of the DC motor arrangement of Figure 1.
Figure 3 shows an exploded view of the filter unit of the DC motor arrangement of Figure 2.
Figure 4 provides an electric scheme of this DC motor arrangement.
Figure 5 shows a detail of the connection between the filter unit described above and the gear housing of the DC motor arrangement.
Figure 6 shows a detail of the connection between the metallic portion and the wall of the gear housing.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

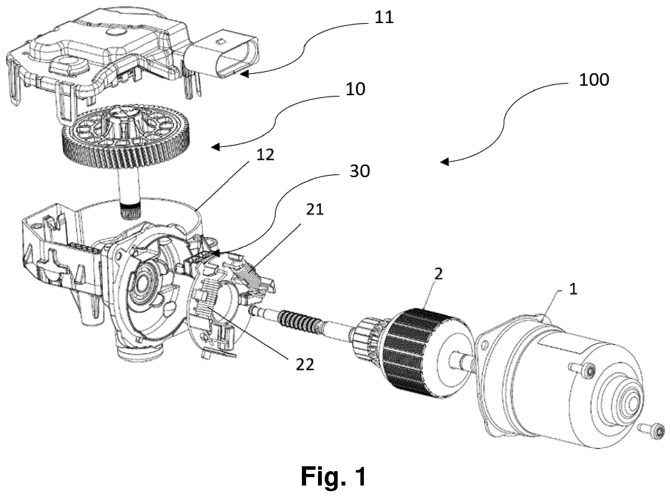

Figure 1 shows a first exploded view of a DC motor arrangement 100 for an automotive wiper according to the invention.

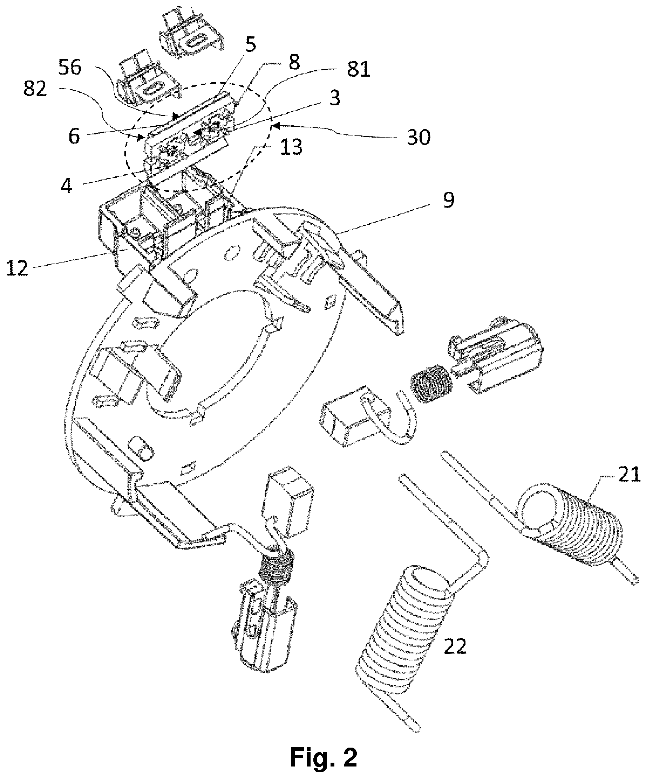

This DC motor arrangement 100 comprises
a first portion of a housing 1 and a second portion of a housing 12;
a DC motor 2 intended to be located inside the first portion of the housing 1,
a filter unit 30 (more detailed view in figure 2) associated to the DC motor 2 to reduce the electromagnetic noise caused by this DC motor 2.

For example, the first portion of the housing 1 can be a motor housing and the second portion of the housing 12 can be a gear housing.

The DC motor arrangement 100 comprises further a motor gear 10 intended to be disposed inside the gear housing 12 and a gear cover 11 intended to cooperate with the gear housing 12 to cover the gear housing 12.

Figure 2 shows a second exploded view of a detail of the DC motor arrangement 100 of Figure 1.

The DC motor arrangement 100 comprises further a brush card 9, a first inductor 21, a second inductor 22, a first power line 2a and a second power line 2b of the DC motors 2.

The first power line 2a and the second power line 2b are respectively connected to the filter unit 30 by the interposition of the first inductor 21 and the second inductor 22.

In the embodiment shown in figure 2, the filter unit 30 comprises:
a first filter means 3 comprising a first plurality of capacitors, here for example four capacitors, disposed on a common substrate 8;
a second filter means 4 comprising a second plurality of capacitors, here for example also four capacitors, disposed on the common substrate;
a first portion 5 of a metallic plate 56 connected to the first filter means 3 via the common substrate 8;
a second portion 6 of a metallic plate 56 connected to the second filter means 4 via the common substrate 8.

For example, all the capacitors comprised in the first and second filter means 3, 4 are multi-Layer ceramic capacitors (MLCC) designed as surface mounted device (SMD), which provide a good packaging size and a low parasitic inductance, and the common substrate 8 is a printed circuit board 8.

The first and second filter means 3, 4 are disposed on a first layer 81 of the printed circuit board 8. The printed circuit board 8 comprises at least a second layer, here for example a back layer 82 electrically connected to the metallic plate 56 which is intended to be connected in series to the second portion of the housing 12.

Now referring to figures 2 to 4 to illustrate how the connection between the metallic plate 56 and second portion of the housing 12 is achieved.

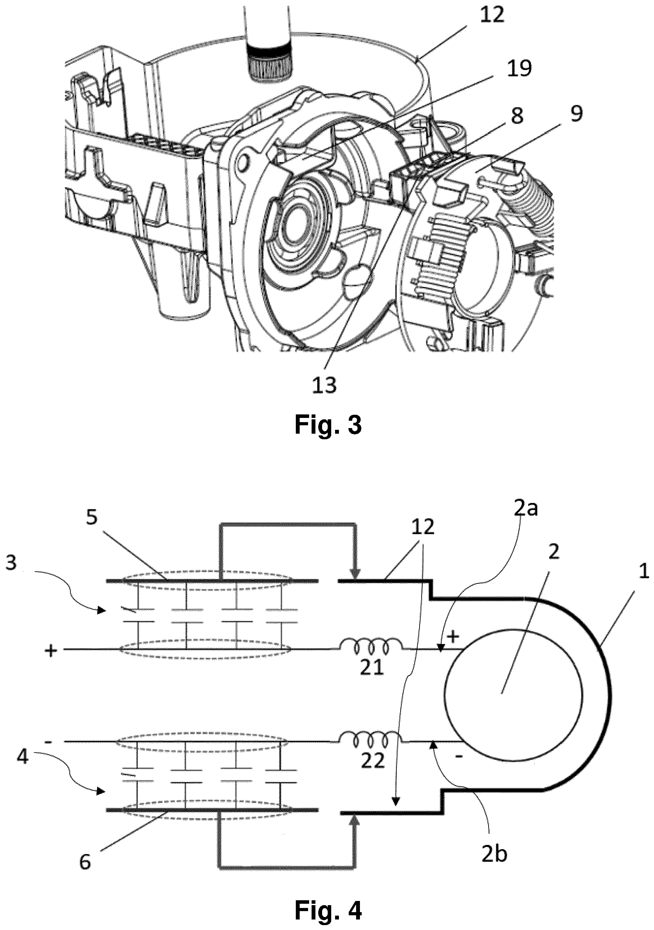

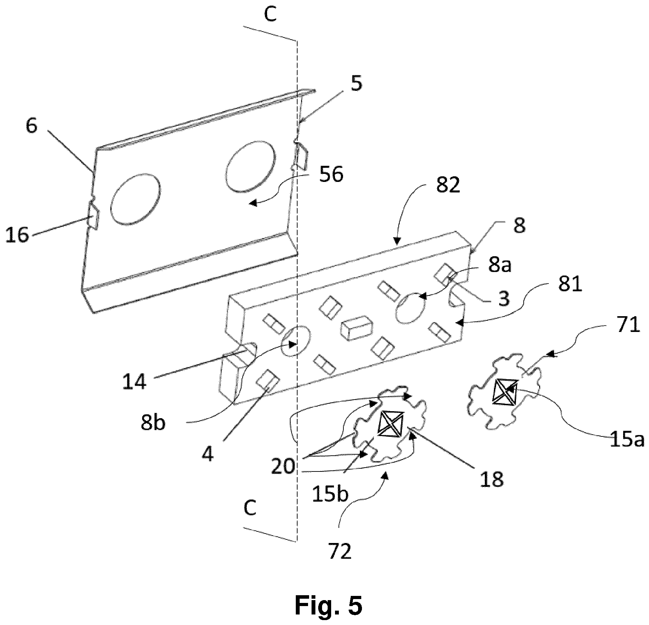

The brush card 9 comprises a slot 13 where the printed circuit board 8 is housed. A portion of this brush card 9, comprising the slot 13, is intended to be inserted in an opening 19 (figure 3) of the gear housing 12. The metallic plate 56 of the filter unit 30 partially closes this opening 19 by making contact with the second portion of the housing 12. This engagement will be seen with further detail in figure 5.

The front layer 81 of the printed circuit board 8 is intended to route the capacitors of the first and second filter means 3, 4. The back layer 82 is made of copper and is electrically connected to the first and second portions 5, 6 of the metallic plate 56.

Figure 4 provides an electric scheme of this DC motor arrangement.

Each power line 2a, 2b of the DC motor 2 is connected to a corresponding filter means 3, 4, by the interposition of the corresponding inductor 21, 22. Each filter means 3, 4 are connected in series between the corresponding inductor 21, 22 and the corresponding portion 5, 6 of the metallic plate 56. The capacitors of each filter means 3, 4 are connected in parallel with each other.

Finally, each portion 5, 6 of the metallic plate 56 is connected to the gear housing 12. The metallic plate 56, the second portion of the housing 12 together with the first portion of the housing 1 form thus an electromagnetic shield, commonly known as Faraday shield or Faraday cage, of the DC Motor 2 so as to improve the electromagnetic compatibility EMC performance.

Figure 5 shows an exploded view of the filter unit 30 of the DC motor arrangement 100 of Figure 2.

The printed circuit board 8 further comprises a first contact retainer 71 and a second contact retainer 72 which are soldered to the front layer 81 to route the capacitors of the first and second filter means 3, 4.

Each contact retainer 71, 72 has an orifice 15a, 15b to receive a corresponding DC motor power line 2a, 2b and arranged to hold the corresponding DC motor power line 2a, 2b in a tight manner, thus connecting each DC motor power line 2a, 2b to the corresponding filter means 3, 4.

It is worth noting that when the first and second power line 2a, 2b are respectively connected in series with the first and second inductor 21 and 22, the orifices 15a, 15b of the first and second contact retainer 71, 72 are arranged to receive the corresponding power line 2a, 2b via the corresponding inductor 21, 22.

In one embodiment, the contact pin of the first and second inductor 21, 22 are respectively received in the first and second orifice 15a, 15b of the first and second contact retainer 71, 72. The resort force applied on these contact pin of the first and second inductor 21, 22 cooperates with the curved spring elements to obtain a resilient contact for ensuring the reliable contact between the contact retainers 71, 72 and the corresponding DC motor power lines 2a, 2b.

In an alternative solution, dedicated contact pins are used to be inserted in the orifices 15a, 15b of the first and second contact retainer 71, 72 and the first and second inductor 21, 22 can then be soldered to these dedicated contact pins.

Further, as may be seen in this figure 5, each contact retainer 7 comprises a plurality of curved spring elements 18, here for example four curved spring elements 18, defining the corresponding orifice 15 and arranged to hold a corresponding DC motor power line against the spring elements when the corresponding DC motor power line is inserted into the orifice 15.

The capacitors of the first filter means 3 are arranged symmetrically with respect to a first hole 8a of the printed circuit board 8 intended to receive the orifice 15a of the first contact retainer 71 and the capacitors of the second filter means 4 are arranged symmetrically with respect to the a second hole 8b of the printed circuit board 8 intended to receive the orifice 15b of the second contact retainer 72.

Each two adjacent capacitors of the first filter means 3 form an angle of 90° and each two adjacent capacitors of the second filter means 4 form an angle of 90°

Each contact retainer 71, 72 has a flat portion centred by the corresponding orifice 15a, 15b. The flat portion having a plurality of recess areas 20 disposed symmetrically with respect to the corresponding orifice. Each flat portion has four recess areas, each recess area being disposed at least partially around a capacitor of the corresponding first or second filter means 3, 4.

The metallic plate 56 is intended to be soldered to the back layer 82 of the printed circuit board 8. The printed circuit board 8 comprises at least a notch 14 to receive a corresponding protrusion 16 of the metallic plate 56. This interconnection between the protrusion 16 and the notch 14 is useful in the soldering process of the metallic plate 56 to the back layer 82 of the printed circuit board 8, where an attachment is required to avoid undesired displacement of the metallic plate 56 with respect to the printed circuit board 8.

In different embodiments, not shown in the figures, the DC motor power lines 2a, 2b can be soldered to the printed circuit board 8.

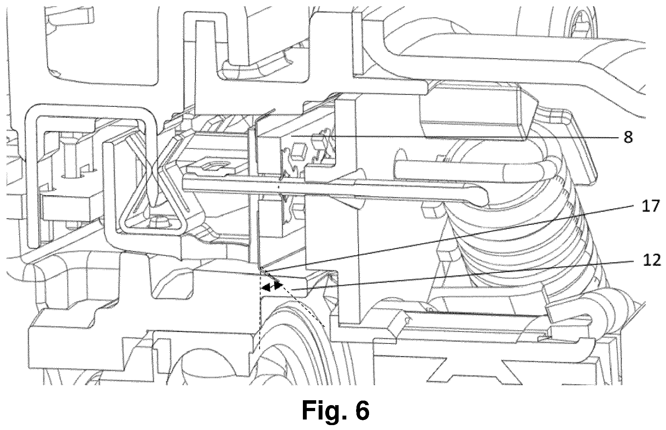

Figure 6 shows a cross section view C-C of the DC motor arrangement 100 when the DC motor arrangement 100 is assembled.

Each vertical side of the metallic plate 56 comprises an edge 17 which is bended and forms an angle between 0° to 90°, preferably between 40º and 60°, with respect to the gear housing 12. Such bended edge 17 can advantageously ensure a reliable electrical contact with the metallic plate 56 and the gear housing 12 by keep a press fit contact with the gear housing 12.

## Claims

1. DC motor arrangement for an automotive wiper, the DC motor arrangement (100) comprising
a first portion of a housing (1) and a second portion of a housing (12);
a DC motor (2) located inside the first portion of the housing (1), the DC motor (2) comprising a first power line (2a) and a second power line (2b); and
a filter unit (30) associated to the DC motor (2);
wherein the filter unit (30)comprises:
a first filter means (3) connected in series with the first power line (2a);
a second filter means (4) connected in series with the second power line (2b);
a first portion (5) of a metallic plate (56) connected to the first filter means (3);
a second portion (6) of a metallic plate (56) connected to the second filter means (4);
wherein the first portion (5) of the metallic plate (56) and the second portion (6) of the metallic plate (56) are electrically connected to a common substrate (8), and respectively connected in series to the second portion of the housing (12).

2. DC motor arrangement according to claim 1, wherein the first filter means (3) are connected to the first power line (2a) by the interposition of a first inductor (21) and the second filter means (4) are connected to the second power line (2b) by the interposition of a second inductor (22).

3. DC motor arrangement according to any of the preceding claims, wherein the common substrate (8) is a printed circuit board (8) and wherein the first and the second filter means (3, 4) are surface mounted devices disposed on the printed circuit board (8).

4. DC motor arrangement according to claim 3, wherein the printed circuit board (8) comprises a first layer (81) arranged to route the first and the second filter means (3, 4) and a second layer(82) arranged to be electrically connected to the first and the second portions (5, 6) of the metallic plate (56).

5. DC motor arrangement according to claim 4, wherein the metallic plate comprise at least one protrusion (16) and the printed circuit board (8) comprises at least one notch (14) arranged to cooperate with the corresponding at least one protrusion (16).

6. DC motor arrangement according to any of claims 4 or 5, wherein the printed circuit board (8) comprises at least one contact retainer (71, 72) soldered to the first layer (81), each contact retainer (71, 72) having an orifice (15a, 15b) to receive a corresponding DC motor power line (2a, 2b) and arranged to hold the corresponding DC motor power line (2a, 2b) in a tight manner.

7. DC motor arrangement according to claim 6, wherein each contact retainer (71, 72) comprises a plurality of curved spring elements (18) defining the orifice (15a, 15b) and arranged to hold a corresponding DC motor power line (2a, 2b) against the spring elements (18) when the corresponding DC motor power line (2a, 2b) is inserted into the orifice (15a, 15b).

8. DC motor arrangement according to any of claims 4 or 5, wherein the DC motor power lines (2a, 2b) are soldered to the first layer (81) of the printed circuit board (8).

9. DC motor arrangement according to any of the preceding claims, wherein the first filter means (3) comprises a first plurality of capacitors connected in parallel between the first power line (2a) and the first portion (5) of the metallic plate (56) and the second filter means (4) comprise a second plurality of capacitors connected in parallel between the second power line (2b) and the second portion (6) of the metallic plate (56).

10. DC motor arrangement according to claim 9, wherein the first and the second plurality of capacitors (3, 4) are multi-layer ceramic chip capacitors disposed on the common substrate (8).

11. DC motor arrangement according to any of claims 9 or 10 when claim 9 depends on any of claims 6 or 7, wherein the capacitors of the first plurality of capacitors are arranged symmetrically with respect to one hole (8a) of the printed circuit board (8) and the capacitors of the second plurality of capacitors are arranged symmetrically with respect to another orifice (8b) of the printed circuit board (8).

12. DC motor arrangement according to claim 11, wherein each of the first and the second plurality of capacitors comprises four capacitors, wherein two adjacent capacitors of the first plurality of capacitors form an angle of 90° and two adjacent capacitors of the second plurality of capacitors form an angle of 90°.

13. DC motor arrangement according to any of claims 9 to 12 when claims 9 depends on any of claims 6 to 7, wherein each contact retainer (71, 72) has a flat portion around the orifice (15a, 15b), the flat portion having a plurality of recess areas (20) disposed symmetrically with respect to the orifice (15a, 15b).

14. DC motor arrangement according to claim 13, wherein the flat portion has four recess areas, each recess area (20) being disposed at least partially around a capacitor of the corresponding first or second filter means (3, 4).

15. DC motor arrangement according to any of the preceding claims, wherein
the DC motor arrangement comprises a brush card (9),
the filter unit is inserted in a slot (13) comprised in a portion of the brush card (9),
the second portion of the housing (12) comprises an opening (19), and
the portion of the brush card (9) is inserted into the opening (19) so that first and second portion (5, 6) of the metallic plate (56) close, at least partially, said opening (19).
